# EUROPEAN PATENT APPLICATION

(11) **EP 1 513 240 A2**
(43) Date of publication of application: **09.03.2005**
(21) Application number: 04004427.3
(22) Date of filing: 26.02.2004
(51) Int. Cl.: H02J 9/06, H02J 7/35

(54) **Apparatus for supplying standby power**

(30) Priority: 02.09.2003 JP 2003309620; 02.09.2003 JP 2003309623
(71) Applicant: MARANTZ JAPAN, INC., SAGAMIHARA-SHI, KANAGAWA, 228-8505 (JP)
(72) Inventor: Sekine, Yutaka, Zama-shi, Kanagawa 228-0011 (JP)
(74) Representative: Patentanwälte Leinweber & Zimmermann

(57) **Abstract**

Provided is an apparatus for supplying standby power which comprises a means for supplying standby power based on a solar cell and another means for supplying standby power based on an industrial/domestic power supply, wherein the two means are selectively used by switching. The apparatus aims at saving, as much as possible, the energy consumption by the supply of standby power from the industrial/domestic power supply while maintaining the supply of standby power. The apparatus further aims at avoiding that, when the supply of standby power is switched between the two standby power supply means, data present at that instant in a personal computer to be supplied with the standby power and/or preset information stored in a microprocessor incorporated in an electric/electronic device will disappear. The apparatus for supplying standby power (1) is constructed comprising a first standby power supply means (2) for supplying standby power by means of a solar cell; a second standby power supply means (3) for supplying standby power by means of an industrial/domestic power supply; and a switching means (4) for preferentially supplying the standby power from the first standby power supply means (2) and for switching to the supply of standby power from the second standby power supply mean (3) when the standby power from the first standby power supply means (2) falls below a predetermined level, wherein the supply of the standby power is maintained by a backup section (16) when the switching is made.

## Description

### FIELD OF THE INVENTION

This invention relates to an apparatus for supplying standby power to an electric and/or an electronic device to keep it in a so-called standby mode, i.e., a mode in which such an electric and/or an electronic device is ready to immediately start operation.

In particular, the present invention relates to an apparatus for supplying standby power which is constructed, for the purpose of saving the electric energy consumption (i.e., for the so-called energy saving), in such a manner that a solar cell supplies a part of the standby power.

### BACKGROUD OF THE INVENTION

There has been known a standby power supply with such a structure that electric currents from a solar cell are used for a part of the supply of standby power to thereby save energy. Such a standby power supply is disclosed, for example, in Japanese Patent Application Laid-Open No. 2000-224516.

There are certain types among electric and electronic devices which require warming up before utilization (operation). In order to bring an electric or an electronic device of such a type into immediate operation at a desired time of use, means is provided in general to keep such device in a standby mode by continuously supplying the device with so-called standby power, i.e., power for enabling the device to immediately start functioning from the condition in which it is not used.

To keep such an electric or an electronic device in the standby mode, however, the standby power must be supplied to the device in a continuous manner throughout the period when the device is in the standby mode, which brings about a problem that electric energy is also wasted during such period. This problem is serious, in particular, since the above-described continuous supply of standby power is contrary to the tendency of present days that the society strongly demands energy saving.

When electric power is consumed, the relevant energy plant is caused to generate more electric power in correspondence therewith, which, if this energy plant employs the thermal-power generation system, will cause problems that the air pollution is worsened and that the undesirable emission of carbon dioxide is increased. One may then think of utilizing a solar cell to generate the standby power as means for supplying standby power which can meet the requirement of energy saving and alleviate the problem of air pollution.

Since the standby power may be small in amount when it is supplied to an electric or an electronic device in its standby mode, no problem will be caused even when a solar cell of a relatively small power generating capacity is used. It should however be noted that, when placed in such a condition that light greater in amount than a predetermined level cannot be obtained such as on a rainy day or in the nighttime, a solar cell cannot generate the necessary amount of electric power (standby power) as its result.

In this respect, the invention disclosed in Japanese Patent Application Laid-Open No. 2000-224516 has such a structure that the electric power from a solar cell and the electric power fed from an industrial mains supply/domestic mains supply are selectively used to supply the standby power in a situation such as that described above, whereby the problem that the supply of the standby power is stopped can be circumvented.

In the case where the electric power from a solar cell and the electric power from an industrial mains supply/domestic mains supply are selectively used, however, it will not be sufficient to merely selectively use the two electric powers from the viewpoint of real energy saving. A problem still remaining is that it is desirable to use the electric power from a solar cell as much as possible.

In the case where the electric/electronic device to be supplied with standby power is a computer, for example, when the supply of standby power is switched from the electric power from a solar cell to the electric power from a power plant, the computer to be supplied with the standby power may fail to receive the standby power though for a very short period of time, which may cause a problem that the data so far stored in the memory may disappear due to the above failure of supply of the standby power.

Many of the recent electric and electronic devices are controlled by microcomputers. Therefore, in the case of such a device that the conditions of use are set thereto by a micro computer each time it is used, if the supply of standby power stops, even momentarily, in the standby mode due to changing over of the standby powers, the set items and/or the data so far obtained will disappear. Thus, problems which will be caused by changing over the standby powers range wide and are therefore serious.

### SUMMARY OF THE INVENTION

The present invention was made in view of the above-described situations and has a first object to provide an apparatus for supplying standby power which can supply standby power to an electric and/or an electronic device in the standby mode in a continuous manner, wherein the energy required to supply the standby power can be saved as much as possible. A second object of the present invention is to provide an apparatus for supplying standby power which can supply standby power to an electric and/or an electronic device in the standby mode, wherein memory data and/or set items in the electric and/or electronic device to be supplied with the standby power will not disappear even when switching over between two standby power supply means is performed.

The present invention is an apparatus for supplying standby power which is constructed such that the supply of standby power from a solar cell is prioritized over the supply of standby power from an industrial and/or a domestic power supply wherein switching is made to the supply of standby power from the industrial/domestic power supply when the standby power from the solar cell falls below a predetermined level, and is further constructed such that the electric power from the solar cell and the electric power from the industrial/domestic power supply are selectively used by switching between them wherein the supply of the standby power is maintained even when such switching is made.

More specifically, an apparatus for supplying standby power according to a first aspect of the invention is constructed comprising a first standby power supply means, provided with a solar cell for generating electric power from solar rays and a battery section for storing the electric power from the solar cell, for supplying the standby power; a second standby power supply means for receiving electric power from an industrial and/or a domestic power supply and for supplying standby power therefrom after conversion into a desired voltage; and a switching means for supplying the standby power from the first standby power supply means or the second standby power supply mean with the supply of the standby power from the first standby power supply means being given priority and for switching the supply of the standby power from the first standby power supply means to the second standby power supply means when the electric power supplied from the first standby power supply means falls below a predetermined level.

In a specific construction, the determination whether the electric power supplied from the first standby power supply means is below the predetermined level may be made based on a voltage of the standby power supplied from the first standby power supply means.

In a specific construction, a voltage detector may be provided for detecting the voltage of the standby power supplied from the first standby power supply means, wherein control signals may be generated to select the supply of standby power from the first standby power supply means when the detected value of voltage at the voltage detector is 12 volts, for example, corresponding to the condition that the battery section has been fully charged and to select the supply of standby power from the second standby power supply means when the detected value of voltage is 10.5 volts, for example, corresponding to the end-point voltage of the battery section.

According to the apparatus for supplying standby power of the above-described structure, the standby power from the first standby power supply means is supplied preferentially over the standby power from the second standby power supply means, and when the standby power from the first standby power supply means falls below the predetermined level, switching is made so that the standby power is supplied from the second standby power supply means.

An apparatus for supplying standby power according to a second aspect of the invention is constructed comprising a first standby power supply means, provided with a solar cell for generating electric power from solar rays and a battery for storing the electric power from the solar cell, for supplying the standby power; a second standby power supply means for receiving electric power from an industrial and/or a domestic power supply and for supplying standby power therefrom after conversion into a desired voltage; and a switching means for switching the supply of standby power between the first standby power supply means and the second standby power supply mean in such a manner that the supply of standby power is maintained even when the switching is made.

In a specific structure for making it possible to maintain the supply of standby power even when the supply of standby power is switched between the first standby power supply means and the second standby power supply means, the switching means may be provided with a backup section for supplying the standby power.

In a specific structure, the backup section for supplying the standby power may comprise a capacitor or a secondary battery. Furthermore, the backup section may receive electric power to be stored from at least one of the first standby power supply means and the second standby power supply means.

According to the apparatus for supplying standby power of the above-described structure, even when the supply of standby power is switched from the first standby power supply means to the second standby power supply means and even when the supply of standby power is switched from the second standby power supply means to the first standby power supply means, an electric and/or an electronic device to be supplied with the standby power can receive the standby power in a continuous manner by virtue of the operation of the switching means, whereby any interruption of the supply of standby power is avoided.

According to the invention, by virtue of the structure that the supply of standby power from the first standby power supply means based on the supply of electric power from the solar cell is prioritized over the supply of standby power from the second standby power supply means based on the supply of electric power from the industrial/domestic power supply, the energy consumption for the supply of standby power can be suppressed and the environmental pollution accompanied by the generation of electricity for the industrial/domestic power supply can also be suppressed. Furthermore, by the provision of the switching means for switching the supply of standby power between the two standby power supply means in such a manner that the supply of standby power is maintained even when the switching is made, the necessary standby power can be supplied in a continuous manner even when the supply of standby power is switched between the two standby power supply means whereby the data store in and/or other information set to the electric/electronic device to be supplied with the standby power will never be lost.

### BRIEF DESCRIPTION OF THE DRAWINGS

Fig. 1 is a block diagram showing the structure of an embodiment of the present invention;
Fig. 2 is a diagrammatic illustration showing the detailed structure of switching unit provided in the embodiment shown in Fig. 1; and
Fig. 3 is an illustration showing changes in voltage of the standby power when switching over is made from a first standby power supply unit to a second standby power supply unit in the embodiment shown in Fig. 1.

### DESCRIPTION OF THE PREFERRED EMBODIMENT OF THE INVENTION

An embodiment of the present invention will now be described with reference to the accompanying drawings. It should however be noted that the present invention is not restricted to the embodiment shown.

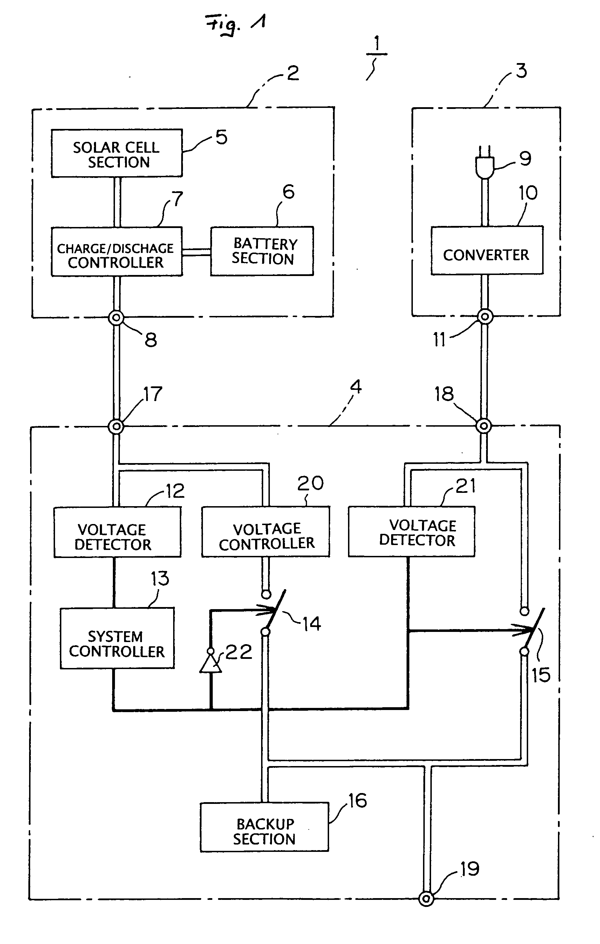

An apparatus for supplying standby power 1 is constructed comprising, as shown in Fig. 1, a first standby power supply unit 2, a second standby power supply unit 3 and a switching unit 4.

The first standby power supply unit 2 is arranged to generate electric power from solar rays and supply standby power based on the generated electric power. The first standby power supply unit 2 is constituted principally by a solar cell section 5 provided with a solar cell for generating electric power from solar rays, a battery section 6 provided with a secondary battery for storing the electric power from the solar sell section 5, a charge/discharge controller 7 interposed between the solar sell section 5 and the battery section 6 for carrying out a switching control between charging and discharging based on the amount of electric energy stored in the battery section 6, and an output terminal 8 for supplying the electric power.

The second standby power supply unit 3 is provided for receiving alternate current electric power from an industrial or a domestic mains supply and for converting it to a desired voltage to supply standby power. The second standby power supply unit 3 is constituted principally by AC power input terminal 9 for receiving an alternate current from the domestic mains supply, a converter 10 for converting the electric power of the received alternate current to a direct current of a desired voltage (5 volts), and an output terminal 11 for supplying the direct current obtained at the converter 10 to the outside.

The first standby power supply unit 2 and the second standby power supply unit 3 are connected with their respective dedicated cables (not shown) to the switching unit 4.

The switching unit 4 receives the standby power from the first standby power supply unit 2 and the standby power from the second standby power supply unit 3, and carries out a switching operation in such a manner that the standby power from the first standby power supply unit 2 is preferentially supplied whenever the standby power from the first standby power supply unit 2 is above a predetermined level.

More specifically, in respect of the priority of the supply of standby power, the switching unit 4 is constituted principally by a voltage detector 12 for constantly detecting and monitoring a voltage at an input terminal 17 of the electric power from the first standby power supply unit 2, a system controller 13 for carrying out, based on the detection results at the voltage detector 12, such a control that the supply of the standby power from the first standby power supply unit 2 has priority over the supply of the standby power from the second standby power supply unit 3, and switches 14 and 15 controlled by the system controller 13 for carrying out a switching operation between ON and OFF of the supply of the standby power from the first standby power supply unit 2 and a switching operation between ON and OFF of the supply of the standby power from the second standby power supply unit 3, respectively.

The system controller 13 is specifically constructed such that, when signaled by the voltage detector 12 that the voltage of the standby power from the first standby power supply unit 2 is at 12 volts, this system controller determines that this voltage is above the predetermined level, so that the device or the like to be supplied with the standby power can continue its standby operation, and outputs an ON control signal and an OFF control signal to the switches 14 and 15, respectively.

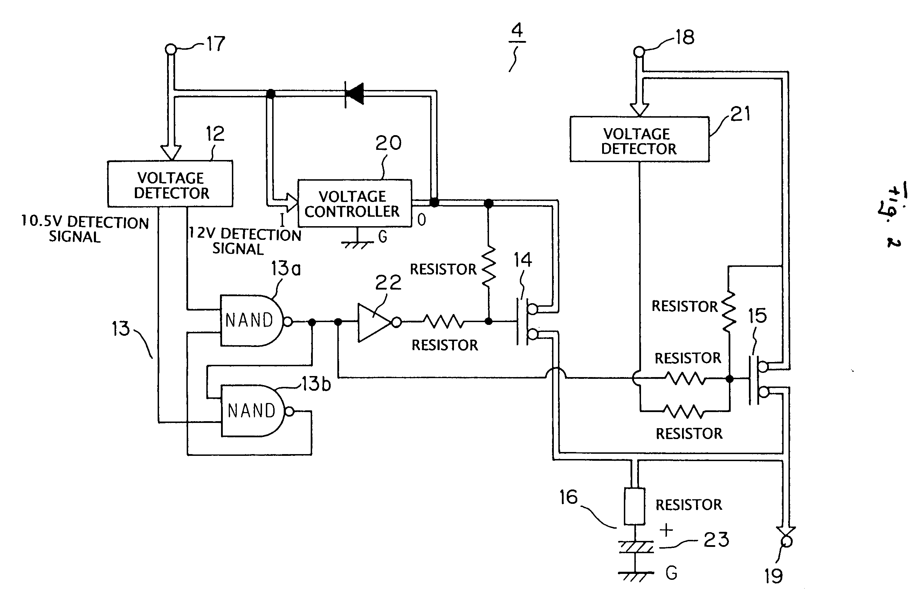

More specifically, as shown in Fig. 2, the voltage detector 12 receives the standby power from the first standby power supply unit 2 through the input terminal 17 and detects its voltage, and then determines whether the voltage is equal to or greater than 10.5 volts (end-point voltage) or less than 10.5 volts for the case where the battery section 6 is being discharged or completely discharged, and determines whether the voltage is equal to or greater than 12 volts or less than 12 volts for the case where the battery section 6 is being charged or fully charged, so that the discharge from the battery section 16 is sufficient. The voltage detector 12 then sends control signals corresponding to the above cases to the system controller 13.

The system controller 13 is constructed comprising two NAND gates 13a and 13b for receiving the two control signals which correspond to the case where the voltage determined at the voltage detector 12 is equal to or greater than 12 volts and the case where the determined voltage is less than 10.5 volts, respectively. The system controller 13 keeps its output high when the control signal at low level is received by the NAND gate 13a and keeps the output low when the control signal at low level is received by the NAND gate 13b.

The system controller 13 is connected at the following stage to an inverter 22 which inverts the control signal received from the system controller 13. On the downstream side of the inverter 22, the switch 14 is connected for rending the supply of the standby power from the first standby power supply unit 2 ON/OFF. On the other hand, the switch 15 is connected on the downstream side of the system controller 13 for rendering the supply of the standby power from the second standby power supply unit 3 ON/OFF. Thus, such an arrangement is obtained that the supply of the standby power from the first standby power supply unit 2 and the supply of the standby power from the second standby power supply unit 3 are selectively established by the switching made in accordance with the signals from the system controller 13.

The apparatus for supplying standby power 1 is thus constructed such that when the standby power from the first standby power supply unit 2 falls below the predetermined level the supply of standby power is switched from the first standby power supply unit 2 to the second standby power supply unit 3. In other words, in respect of the switching of the supply of standby power, the switching unit 4 is constructed comprising the voltage detector 12 for constantly detecting and monitoring the voltage from the output terminal 8 of the first standby power supply unit 2, the system controller 13 for carrying out, based on the detection results at the voltage detector 12, such a control that the supply of the standby power from the second standby power supply unit 3 is selectively used when the voltage of the standby power from the first standby power supply unit 2 falls below the predetermined level, and the switches 14 and 15 controlled by the system controller 13 for carrying out a switching operation between ON and OFF of the supply of the standby power from the first standby power supply unit 2 and a switching operation between ON and OFF of the supply of the standby power from the second standby power supply unit 3, respectively.

Thus, the system controller 13 supplies the control signals to the switch 14 and the switch 15 wherein the inverter 22 is interposed between this controller and the switch 14, as a result of which such an arrangement is obtained that the supply of the standby power, i.e., the supply of power to an output terminal 19, is made by selectively switching between the electric power from the first standby power supply unit 2 and that from the second standby power supply unit 3. On the other hand, the system controller 13 supplies the control signals to the switches 14 and 15 in dependence upon whether the electric power of the first standby power supply unit 2, i.e., the amount of charge stored in the battery section 6 of the first standby power supply unit 2, has been secured above a predetermined level or not.

Thus, the switching unit 4 in the standby power supply 1 has such a structure that a selective switching between the standby power from the first standby power supply unit 2 and that from the second standby power supply unit 3 is carried out so that the supply of standby power from the first standby power supply unit 2 has priority, wherein when the standby power from the first standby power supply unit 2 goes below a predetermined level a switching is made to the supply of standby power from the second standby power supply unit 3.

The switching unit 4 is further constructed such that when switching from the supply of standby power from the first standby power supply unit 2 to the supply of standby power from the second standby power supply unit 3, or from the supply of standby power from the second standby power supply unit 3 to the supply of standby power from the first standby power supply unit 2, the switching is made with the supply of the standby power being maintained.

More specifically, in respect of maintaining the supply of the standby power, the switching unit 4 is constructed comprising the system controller 13, a backup section 16 and the switches 14 and 15. The backup section 16 is provided with an electrolytic capacitor 23 supplied with the standby power from the first standby power supply unit 2 and the standby power from the second standby power supply unit 3 for storing electric power for backup.

In this apparatus for supplying standby power 1, when the system controller 13 outputs, in response to the condition that the battery section 6 discharges or is charged in the first standby power supply unit 2, the control signals to the switches 14 and 15 to thereby perform a selective switching of the standby power between the first standby power supply unit 2 and the second standby power supply unit 3, such a situation may arise that both of the switch 14 and the switch 15 are in the OFF state though for a very short period of time, with the result that the standby power is supplied neither from the first standby power supply unit 2 nor from the second standby power supply unit 3 to the output terminal 19. Even during such a period, however, the standby power is supplied from the backup section 16 to the output terminal 19 since the path between the backup section 16 and the output terminal 19 is in a conductive state with the backup section 16 being higher in potential than the output terminal 19.

The switching unit 4 further comprises a voltage controller 20 for converting the voltage of the standby power supplied from the first standby power supply unit 2 from 12 volts to 5 volts, and a voltage detector 21 for determining whether the voltage of the standby power supplied from the second standby power supply unit 3 is equal to or less than 4.5 volts which is the minimum voltage for a microprocessor to function correctly.

The apparatus for supplying standby power 1 is constructed as described above. The operation of this apparatus for supplying standby power 1 will now be described.

The user places the solar cell section 5 of the first standby power supply unit 2 so that the solar cell is directed toward the sun to enable it to receive the solar energy as much as possible, plugs the AC power input terminal 9 into the domestic mains outlet and then connects the device to be supplied with the standby power to the output terminal 19.

At this initial point of time of the usage, it will be determined that the electric power dischargeable by the battery section 6 is not sufficient, so that the supply of standby power from the first standby power supply unit 2 cannot be expected. In this case, however, since the AC power input terminal 9 has been plugged into the domestic mains outlet the second standby power supply unit 3 is in operation and supplies the standby power to the switching unit 4.

The standby power received at the input terminal 18 is sent to the voltage detector 21 at which the voltage of this standby power is detected. When it is determined by the voltage detector 21 that the voltage of the supplied standby power is equal to or greater than 4.5 volts which is the minimum voltage required by a microprocessor incorporated in the electric/electronic device to be supplied with the standby power to correctly function, the voltage detector 21 outputs a control signal for rendering the switch 15 ON. At the same time, this control signal from the voltage detector 21 causes the inverter 22 to output a control signal for rendering the switch 14 OFF.

In this apparatus for supplying standby power 1, the AC voltage of 100 volts from the AC power input terminal 9 is converted by the AC/DC converter 10 in the second standby power supply unit 3 into the DC voltage (5 volts) for the standby power which secures the correct functioning of the microprocessor. This standby power is then sent through the switch 15 to the output terminal 19 as well as the backup section 16. The electric/electronic device in question receives the standby power from the output terminal 19 and is thus enabled to enter its standby mode. Also, the backup section 16 receives the standby power to store electric power in the electrolytic capacitor 23.

On the other hand, as time lapses, the solar cell section 5 in the first standby power supply unit 2 generates electric power by converting the solar energy and supplies it through the charge/discharge controller 7 to the battery section 6. When the battery section 6 has stored electric power from the solar sell section 5 to such extent that the stored power is sufficient in amount to be discharged, the standby power is supplied from the battery section 6 through the charge/discharge controller 7 and the output terminal 8 to the switching unit 4.

In the switching unit 4, when it is determined that the voltage of the standby power at this point of time is appropriate for the correct functioning of the micro processor of the electric/electronic device in question and a signal representing such determination is sent to the NAND gate 13a, the NAND gate 13a outputs the control signals for rendering the switch 14 ON and the switch 15 OFF, respectively. More specifically, the control signal at the high level from the NAND gate 13a is converted by the inverter 22 into a low-level signal which then reaches the switch 14 and renders it ON. On the other hand, the switch 15 receives the control signal at the high level and is rendered OFF.

Consequently, the standby power supplied through the output terminal 19 is switched from the second standby power supply unit 3 to the first standby power supply unit 2. At the same time, the supply of electric power to the backup section 16 is switched from the second standby power supply unit 3 to the first standby power supply unit 2.

Thus, although the apparatus for supplying standby power 1 comprises both the first standby power supply unit 2 and the second standby power supply unit 3, when an enough amount of generation of electricity by the solar sell section 5 is secured and, as a result, the battery section 6 has come to have a sufficient discharging capability, the first standby power supply unit 2 supplies the standby power preferentially over the second standby power supply unit 3. This apparatus for supplying standby power 1 can therefore reduce energy consumption from the AC mains by the amount by which the first standby power supply unit 2 preferentially supplies the standby power over the second standby power supply unit 3, with the result that it becomes possible to reduce pollution or the like to the environment.

As the first standby power supply unit 2 continues the supply of the standby power, the amount of generation of electricity by the solar cell section 5 and/or the electric power stored in the battery section 6 may decrease. If the voltage at the output terminal 8 of the standby power fed from the first standby power supply unit 2 falls below 10.5 volts, the voltage detector 12 in the switching unit 4 determines that the voltage at output terminal 8 of the standby power from the first standby power supply unit 2 is lower than 10.5 volts, so that the system controller 13 switches the supply of the standby power from the first standby power supply unit 2 to the second standby power supply unit 3.

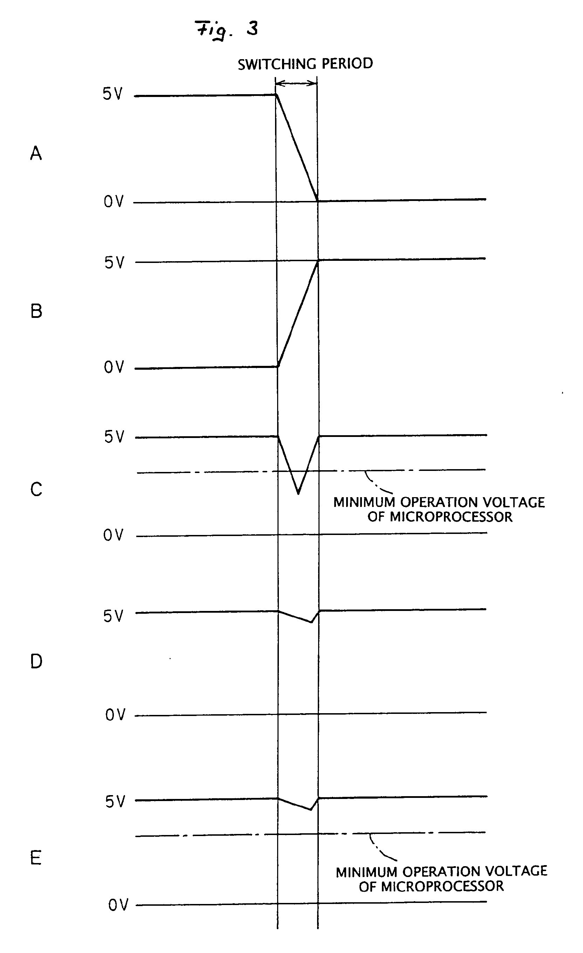

When the supply of the standby power is switched from the second standby power supply unit 3 to the first standby power supply unit 2, the voltage of the standby power fed from the second standby power supply unit 3 varies from 5 volts to zero volt and the voltage of the standby power fed from the first standby power supply unit 2 varies from zero volt to 5 volts, as shown in Fig. 3 at A and B, respectively. Therefore, during the switching over of the standby powers, the voltage obtained from the standby powers from the first and second standby power supply units 2 and 3 varies as shown in Fig. 3 at C.

During the time period when the supply of the standby power is switched, however, the electrolytic capacitor 23 of the backup section 16 in the switching unit 4 supplies electric power for the backup (Fig. 3 at D), as a result of which the voltage of the standby power during that period is equal to the sum of these voltages. Consequently, the voltage of the standby power varies as shown in Fig. 3 at E, wherein the operation voltage of the microprocessor of the electric/electronic device to be supplied with the standby power is secured, so that memory data and/or other items set in relation to such microprocessor will not disappear.

Thus, with this apparatus for supplying standby power 1, even when the first standby power supply unit 2 and the second standby power supply unit 3 are switched over, it is ensured that the necessary standby power continues to be supplied. Likewise, when the supply of the standby power is switched from the first standby power supply unit 2 to the second standby power supply unit 3 in the apparatus for supplying standby power 1, the backup section 16 supplies the electric power to maintain the supply of the necessary standby power to thereby secure the operation voltage of the microprocessor of the electric/electronic device, so that memory data and/or other items set in relation to such microprocessor will not be lost.

In this standby power supply 1, the power generation capacity of the solar cell section 5 of the first standby power supply unit 2 should properly be selected in accordance with the electric power required as the standby power.

In the apparatus for supplying standby power 1 described above, whether the standby power as supplied from the first standby power supply unit meets the required amount or not is determined based on its voltage. It may alternatively be possible to perform such determination based on the electric current.

In the apparatus for supplying standby power 1, although the electrolytic capacitor 23 is used as means for storing electricity in the backup section 16, a secondary battery may alternatively be used. The electrical storage capacity of the backup section 16 may preferably be selected in accordance with the required standby power (the minimum operation voltage of the microprocessor).

The apparatus for supplying standby power 1 of the above-described structure is an apparatus which is separate from the objective electric/electronic device to which the standby power should be supplied. The apparatus for supplying standby power 1 may alternatively be integrated into such an objective electric/electronic device. Also, the second standby power supply unit 3 and/or the switching unit 4 may be incorporated into the objective electric/electronic device to be supplied with the standby power.

## Claims

1. An apparatus for supplying standby power comprising:
a first standby power supply means, provided with a solar cell for generating electric power from solar rays and a battery section for storing the electric power from said solar cell, for supplying the standby power;
a second standby power supply means for receiving electric power from an industrial and/or a domestic power supply and for supplying standby power therefrom after conversion into a desired voltage; and
a switching means for supplying the standby power from said first standby power supply means or said second standby power supply mean with the supply of the standby power from said first standby power supply means being given priority and for switching the supply of the standby power from said first standby power supply means to said second standby power supply means when the electric power supplied from said first standby power supply means falls below a predetermined level.

2. An apparatus for supplying standby power according to claim 1, wherein it is determined in said switching means whether the electric power supplied from said first standby power supply means is below said predetermined level based on a voltage thereof.

3. An apparatus for supplying standby power according to claim 1 or claim 2, wherein said switching means is further arranged to switch the supply of the standby power between said first standby power supply means and said second standby power supply means in such a manner that the supply of the standby power is maintained even when the switching is made.

4. An apparatus for supplying standby power comprising:
a first standby power supply means, provided with a solar cell for generating electric power from solar rays and a battery for storing the electric power from said solar cell, for supplying the standby power;
a second standby power supply means for receiving electric power from an industrial and/or a domestic power supply and for supplying standby power therefrom after conversion into a desired voltage; and
a switching means for switching supply of the standby power between said first standby power supply means and said second standby power supply mean in such a manner that the supply of the standby power is maintained even when the switching is made.

5. An apparatus for supplying standby power according to claim 4, wherein said switching means comprises a backup section for storing the standby power supplied from at least one of said first standby power supply means and said second standby power supply means.

6. An apparatus for supplying standby power according to claim 5, wherein said backup section comprises at least one of an electrolytic capacitor and a secondary battery.
